## Europäisches Patentamt
## European Patent Office
## Office européen des brevets

(11) Veröffentlichungsnummer: **0 256 278**
**A1**

(12) # EUROPÄISCHE PATENTANMELDUNG

(21) Anmeldenummer: **87109620.2**

(22) Anmeldetag: **03.07.87**

(51) Int. Cl.⁴: **G11B 5/704**

Die Bezeichnung der Erfindung wurde geändert (Richtlinien für die Prüfung im EPA, A-III, 7.3).

(30) Priorität: **16.07.86 DE 3624061**
**07.08.86 DE 3626658**

(43) Veröffentlichungstag der Anmeldung:
**24.02.88 Patentblatt 88/08**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Lenhart, Armin, Dr. Dipl.-Ing.**
**Schweidnitzer Weg 9**
**D-8520 Erlangen(DE)**
Erfinder: **Hub, Karl-Rupprecht, Dipl.-Ing.**
**Sudetenstrasse 10**
**D-8850 Donauwörth(DE)**

(54) **Magnetplatte und Verfahren zu ihrer Herstellung.**

(57) Der plattenförmige, nicht-magnetische Trägerkörper (2) für ein insbesondere senkrecht (vertikal) zu magnetisierendes Aufzeichnungsmedium (3) weist mindestens eine Flachseite (4 oder 5) mit sehr glatter Oberfläche auf, auf die zumindest eine magnetisierbare Speicherschicht (8 bzw. 9) aufzubringen ist. Dieser Trägerkörper soll leicht mit entsprechenden Oberflächen zu versehen sowie formstabil und hinreichend bruchfest sein. Erfindungsgemäß ist deshalb ein chemisch gehärtetes Glassubstrat (2) vorgesehen, welches neben Na⁺-Ionen in oberflächennahen Zonen (6, 7) eingebaute K⁺-Ionen und zusätzlich noch Ag⁺-Ionen und/oder Ag-Atome aufweist. Zur Härtung dieses Glassubstrates (2) mittels eines Ionenaustauschprozesses unterhalb der für das Glasmaterial charakteristischen Transformationstemperatur wird vorteilhaft das Substrat (2) eine vorbestimmte Zeitlang in eine $KNO_3$-Schmelze eingebracht, der vorteilhaft maximal 10 Gew.-% $AgNO_3$ zugesetzt wurden. Ferner wird das der Schmelze wieder entnommene, noch heiße Glassubstrat (2) vorteilhaft in eine Wasserdampf-Atmosphäre von über 115°C eingebracht.

FIG 1

## Plattenförmiger Trägerkörper für ein Aufzeichnungsmedium und Verfahren zu dessen Herstellung

Die Erfindung bezieht sich auf einen plattenförmigen, aus nicht-magnetischem Material bestehenden Trägerkörper für ein insbesondere senkrecht (vertikal) zu magnetisierendes Aufzeichnungsmedium, dessen mindestens eine Flachseite eine sehr glatte Oberfläche aufweist, auf welche zumindest eine entsprechend zu magnetisierende Speicherschicht aufzubringen ist. Ein derartiger plattenförmiger Trägerkörper ist z.B. aus der EP-A-0 120 413 zu entnehmen. Die Erfindung betrifft ferner ein Verfahren zur Herstellung eines solchen Trägerkörpers.

Das Prinzip der senkrechten Magnetisierung zur Speicherung von Informationen in entsprechenden Aufzeichnungsmedien ist allgemein bekannt (vgl.z.B. "IEEE Transactions on Magnetics", Vol. MAG-16, No. 1, Januar 1980, Seiten 71 bis 76, oder Vol. MAG-20, No. 5, September 1984, Seiten 657 bis 662 und 675 bis 680). Die für dieses vielfach auch als vertikale Magnetisierung bezeichnete Prinzip vorzusehenden Aufzeichnungsmedien können z.B. in Form von starren Magnetspeicherplatten vorliegen. Ein solches Aufzeichnungsmedium weist mindestens eine entsprechend zu magnetisierende Speicherschicht vorbestimmter Dicke aus einem Material mit senkrechter magneto-kristalliner Anisotropie auf, wobei die Achse der sogenannten leichten Magnetisierung dieser Schicht senkrecht zur Oberfläche des Aufzeichnungsmediums ausgerichtet ist. Bevorzugt wird als entsprechendes Speichermaterial CoCr (vgl. z.B. "IEEE Transactions on Magnetics", Vol. MAG-14, No. 5, September 1978, Seiten 849 bis 851). Mittels besonderer Magnetköpfe können dann längs einer Spur die einzelnen Informationen als Bits in aufeinanderfol genden Abschnitten durch entsprechende Magnetisierung der Speicherschicht eingeschrieben werden. Die Bits haben dabei eine vorbestimmte, auch als Wellenlänge bezeichnete Ausdehnung in Längsrichtung der Spur. Diese Ausdehnung kann im Vergleich zu der Grenze, die bei einer Speicherung nach dem bekannten Prinzip der longitudinalen (horizontalen) Magnetisierung durch die Entmagnetisierung gegeben ist, wesentlich kleiner sein. Somit läßt sich durch senkrechte Magnetisierung die Informationsdichte in dem besonderen Aufzeichnungsmedium entsprechend vergrößern.

Die ein-oder beidseitig mit der mindestens einen magnetischen Speicherschicht versehenen plattenförmigen Aufzeichnungsmedien müssen extrem glatte (spiegelglatte) Oberflächen aufweisen, um so Schwierigkeiten bei der Führung der Magnetköpfe über diese Oberflächen hinweg zu vermeiden. Insbesondere für eine vertikale Magnetisierung steigen die Ansprüche an die Oberflächenqualität der Magnetspeicherplatten bei den gewünschten höheren Speicherdichten und bei einer Reduzierung der auch als Flughöhe bezeichneten Führungshöhe der Magnetköpfe. Die Flughöhe dieser Köpfe liegt nämlich bei diesem Magnetisierungsprinzip im allgemeinen deutlich unter 1 μm. Folglich muß auch ein hinreichend formstabiler und fester Trägerkörper bzw. eine auf ihm aufgebrachte Zwischenschicht, auf dem dann die mindestens eine Speicherschicht abzuscheiden ist, eine entsprechend geringe Oberflächenrauhigkeit haben. Der Trägerkörper bzw. seine Zwischenschicht werden deshalb im allgemeinen zu einer entsprechend glatten Spiegelfläche poliert.

Dementsprechend wird auch bei dem aus der genannten EP-A zu entnehmenden Aufzeichnungsmedium zunächst dessen plattenförmiger Trägerkörper aus nicht-magnetischem Material wie z.B. aus einer speziellen Aluminiumlegierung auf mindestens einer seiner Flachseiten z.B. durch Diamantdrehen und Läppen einge ebnet. Auf den so vorbehandelten Trägerkörper wird dann eine Zwischenschicht aus einem nicht-magnetischen, sehr harten Material wie z.B. Nickel-Phosphor mit einer Dicke von etwa 50 μm zumeist stromlos abgeschieden. Diese Zwischenschicht wird anschließend durch Feinläpp-und Polierprozesse zu einer Spiegelfläche mit einer Oberflächenrauhigkeit von beispielsweise 0,04 μm oder weniger und einer Dicke von z.B. etwa 30 μm fein-bearbeitet. Auf diese Spiegelfläche wird anschließend die Speicherschicht aus dem besonders magnetisierbaren Metall aufgebracht, wobei deren Achse der leichten Magnetisierung in senkrechte Richtung bezüglich der Oberfläche des Aufzeichnungsmediums ausgerichtet wird. Auf diesem so erhaltenen schichtweisen Aufbau kann zuletzt noch eine besondere Schutzschicht abgeschieden werden. Bei einer solchen Herstellung dieses bekannten Aufzeichnungsmediums ist jedoch der Verfahrensschritt zur Polierung der Zwischenschicht, wobei besondere Zwischenglühungen vorzunehmen sind, verhältnismäßig aufwendig.

Aufgabe der vorliegenden Erfindung ist es nun, einen Trägerkörper der eingangs genannten Art für ein insbesondere senkrecht zu magnetisierendes Aufzeichnungsmedium zu schaffen, der auf verhältnismäßig einfache Weise mit planparallelen, spiegelglatten Oberflächen versehen werden kann und dabei über Jahre formstabil bleibt und eine hinreichend hohe Bruchfestigkeit aufweist.

Diese Aufgabe wird erfindungsgemäß dadurch gelöst, daß als Trägerkörper ein chemisch gehärtetes Glassubstrat vorgesehen ist, welches neben $Na^+$-Ionen in an seinen Oberflächen angrenzenden Zonen eingebaute $K^+$-Ionen und zusätzlich noch Ag +-Ionen und/oder Ag-Atome aufweist.

Glas wie insbesondere Kalk-Natron-Silikatglas läßt sich nämlich durch mechanische und chemische Läpp-und Polierverfahren sehr eben, glatt und planparallel bearbeiten, so daß die Oberflächenqualität der bekannten Platten aus einer mit NiP beschichteten Al-Legierung ohne weiteres zu erreichen oder sogar zu übertreffen ist. Außerdem ist Glas unmagnetisch und läßt sich durch Dünnschichtverfahren wie z.B. Sputtern verhältnismäßig leicht beschichten. Die Zugfestigkeit von unbehandeltem Glas ist allerdings so gering, daß eine ausreichende Sicherheit gegen Sprödbruch für einen längeren Belastungsfall nicht ohne weiteres gegeben ist. Aufgrund dieser Schwierigkeiten ist zwar eine Härtung von Glas an sich bekannt. Hierzu wird ein Austausch von kleinen Ionen des Glases gegen größere Ionen einer Schmelze oder einer Paste unterhalb der sogenannten Transformationstemperatur des Glases durchgeführt, um so Druckspannungszonen an der Glasoberfläche zu erzeugen (vgl. z.B. "Glastechnische Berichte" 55 (1982) 8, Seiten 171 bis 181 oder "Silikattechnik" 32 (1981) 12, Seiten 360 bis 362). Um hierbei einen raschen Ionentransport zu erreichen, wurden im allgemeinen hohe Temperaturen angestrebt. Dabei besteht jedoch die Gefahr von möglichen Verbiegungen der Glassubstrate. Man ist deshalb zu einer Temperatur-und Zeitbeschränkung gezwungen. Dann sind jedoch bei dem bekannten Austausch von $Na^+$-Ionen des Glases gegen $K^+$-Ionen nur Austauschtiefen, die den gewünschten Druckspannungszonen entsprechen, bis etwa 40 µm und Zugfestigkeiten bis 250 $N/mm^2$ erreichbar. Diese Zugfestigkeiten und Austauschtiefen sind aber für eine Verwendung solcher Gläser für plattenförmige Trägerkörper der speziellen Aufzeichnungsmedien zu gering. Erfindungsgemäß ist deshalb ein zusätzlicher Austausch von $Na^+$-Ionen gegen $Ag^+$-Ionen und/oder Ag-Atome vorgesehen. Dies führt vorteilhaft zu deutlich höheren Zugfestigkeiten und wesentlich ausgedehnteren Austauschtiefen, so daß dann entsprechend behandelte Glassubstrate als Trägerkörper für den genannten Verwendungszweck einzusetzen sind.

Ein Verfahren zur Herstellung eines entsprechenden Trägerkörpers ist erfindungsgemäß dadurch gekennzeichnet, daß zu seiner chemischen Härtung mittels eines Ionenaustauschprozesses unterhalb der für das Glasmaterial charakteristischen Transformationstemperatur das Glassubstrat eine vorbestimmte Zeitlang in eine $KNO_3$-Schmelze eingebracht und schließlich außerhalb der Schmelze auf Raumtemperatur abgekühlt wird. Vorteilhaft ist es, wenn der $KNO^3$-Schmelze maximal 10 Gew.-% $AgNO_3$ zugesetzt wurden. Mit diesem Verfahren können Glassubstrate mit sehr hoher Festigkeit erhalten werden, ohne daß sich ihre Ebenheit und ihre Rauhigkeit verschlechtern.

Besonders vorteilhaft ist es, wenn das aus der Schmelze wieder entnommene, noch heiße Glassubstrat in eine Wasserdampf-Atmosphäre mit einer Temperatur von über 115°C eingebracht wird. Es wurde nämlich erkannt, daß das gelegentliche Auftreten von Anrissen und Rißausbreitung während des Abkühlens seine Ursache in den unvermeidlichen $KNO_3$-Resten auf der Glasoberfläche haben kann. Das $KNO_3$ wechselt nämlich beim Abkühlen auf Raumtemperatur zweimal seine Modifikation, und zwar bei 125°C und bei 115°C. Dabei haben die drei Modifikationen unterschiedliche Dichten. Mit dem Phasenübergang bei 115°C ist eine Volumenvergrößerung verbunden, aufgrund derer seitens des $KNO_3$ dem Glasmaterial unerwünschte Zugspannungen aufgeprägt werden, die zu einer Zerstörung des Glases führen können. Derartige Zugspannungen werden nun mit der angegebenen Maßnahme vorteilhaft vermieden. Dabei wird die stark hygroskopische Eigenschaft von $KNO_3$ ausgenutzt. In der Wasserdampf-Atmosphäre wird folglich von dem $KNO_3$ auf dem Glassubstrat so viel Wasser aufgenommen, daß die harten Modifikationen des $KNO_3$ mit unterschiedlicher Dichte nicht mehr auftreten oder zumindest aufgeweicht werden. Selbstverständlich müssen sich dabei das Glassubstrat zu dem Zeitpunkt, da es dieser besonderen Atmosphäre ausgesetzt wird, ebenso wie diese Atmosphäre selbst noch oberhalb der Temperatur befinden, bei der der mit einer Volumenvergrößerung verbundene Phasenübergang des $KNO_3$ erfolgt.

Vorteilhafte Ausgestaltungen des erfindungsgemäßen Trägerkörpers bzw. seines Herstellungsverfahrens gehen aus den übrigen Unteransprüchen hervor.

Zur weiteren Erläuterung der Erfindung wird auf die schematische Zeichnung Bezug genommen, in deren Figur 1 ein Querschnitt durch einen Teil eines Aufzeichnungsmediums mit einem erfindungsgemäßen Trägerkörper veranschaulicht ist. Figur 2 zeigt eine Vorrichtung, mit der ein spezieller Verfahrensschritt des erfindungsgemäßen Herstellungsverfahrens durchzuführen ist. In Figur 3 ist ein Ausschnitt aus einem Trägerkörper wiedergegeben. In den Figuren sind entsprechende Teile mit denselben Bezugszeichen versehen.

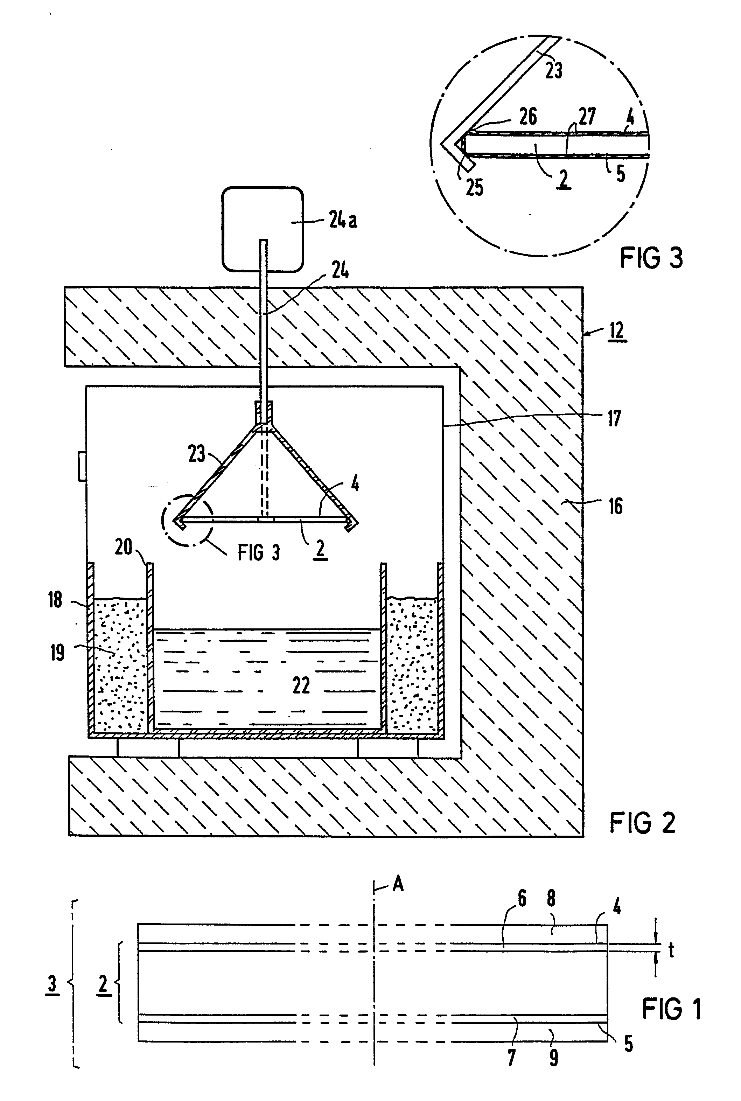

Ein in Figur 1 mit 2 bezeichnetes Glassubstrat soll zum Aufbau einer als Aufzeichnungsmedium 3 vorgesehenen, zu einer Achse A rotationssymmetrischen Magnetspeicherplatte dienen, die z.B. einen allgemein üblichen 5,25 Zoll-Durchmesser haben kann. Bei dem Material des Glassubstrates 2 handelt es sich um handelsübliches Na+-Ionen aufweisendes Glas, insbesondere um ein Kalk-Natron-Silikatglas, das auch unter dem Handelsnamen "Floatglas" bekannt ist. Das Glassubstrat soll zur Herstellung eines insbesondere senkrecht zu magnetisierenden Aufzeichnungsmediums dienen und muß deshalb mindestens eine Flachseite mit sehr glatter Oberfläche aufweisen, wo mindestens eine entsprechend magnetisierbare Speicherschicht aufzubringen ist. Selbstverständlich eignet sich das Glassubstrat 2 aber auch als Träger für Magnetschichten, die nach dem Prinzip der horizontalen (longitudinalen) Magnetisierung zu beschreiben sind. Das Glassubstrat 2 soll erfindungsgemäß chemisch gehärtet sein, wobei in den an seine beiden Flachseiten 4 und 5 angrenzenden Zonen 6 und 7 seine Na+-Ionen teilweise durch K+-Ionen, Ag+-Ionen und/oder Ag-Atome durch Ionenaustausch ersetzt sind. Die in der Figur aus Gründen der Deutlichkeit übertriebene Dicke bzw. Tiefe t dieser Zonen liegt dabei wesentlich über 100 μm, beispielsweise bei etwa 150 μm. Die beiden Flachseiten 4 und 5 des Glassubstrates 2 sollen eine Oberflächenebenheit von unter 1 bis 2 μm, vorzugsweise höchstens 500 nm besitzen. Die genannten Werte für die Oberflächenebenheit stellen dabei die maximal zulässige Abweichung der Flachseiten von einer entsprechenden, ideal ebenen Flachseite dar. Um diese Ebenheit zu erreichen, kann das Glassubstrat durch Läpp-und Polierprozesse entsprechend bearbeitet werden. Hierbei soll auch eine durch die maximale Rauhtiefe $R_t$ festgelegte Oberflächenrauhigkeit von höchstens 40 nm, vorzugsweise unter 20 nm, bezogen auf eine Meßstrecke von 2 mm Ausdehnung, erreicht werden. Unter der Größe $R_t$ wird dabei innerhalb der vorbestimmten Meßstrecke der Abstand verstanden, der zwischen einer oberen, das Oberflächenprofil an seiner höchsten Profilerhebung berührenden Begrenzungslinie und einer dazu parallelen unteren, das Oberflächenprofil an seinem tiefsten Profilteil berührenden Begrenzungslinie ausgebildet ist (vgl. auch Entwurf 1968 zu DIN 4762).

Auf diese so behandelten Flachseiten 4 und 5 werden dann in bekannter Weise die für eine senkrechte (vertikale) Magnetisierung erforderlichen, in der Figur nur angedeuteten Magnetschichten 8 und 9, deren Achsen der leichten Magnetisierung in Normalenrichtung bezüglich der Flachseiten 4 und 5 weisen, sowie gegebenenfalls noch weitere Schichten aufgebracht.

Um die für eine Verwendung des Glassubstrates 2 zum Aufbau einer Magnetspeicherplatte zu fordernde hohe Zugfestigkeit von mindestens 350 N/mm² zu erreichen, muß das Glassubstrat chemisch gehärtet sein. Hierzu wird von bekannten Verfahren und Vorrichtungen ausgegangen. Dementsprechend ist das Glas substrat 2, das nach Vorbehandlungsschritten die geforderte minimale Rauhigkeit und die extreme Ebenheit aufweist, eine vorbestimmte Zeitlang in eine K+-Ionen und Ag+-Ionen enthaltende Schmelze einzubringen, die sich auf einer vorbestimmten Temperatur befindet. Es kommt dann zu dem erwünschten Austausch zwischen den Na+-Ionen des Glases und den K+-und Ag+-Ionen der Schmelze durch Diffusionsvorgänge in den oberflächennahen Diffusionszonen 6 und 7.

Um den gewünschten Ionenaustausch zu erreichen, wird eine Salzschmelze aus $KNO_3$ und maximal 10 Gew.-%, vorzugweise 1 bis 4 Gew.-% $AgNO_3$, in einem Gefäß, beispielsweise einem Tiegel aus Kieselglas, auf die gewünschte Austauschtemperatur erhitzt. Der Zusatz von $AgNO_3$ begrenzt die möglichen Austauschtemperaturen auf einen Bereich bis höchstens 500°C, da darüber eine merkliche $AgNO_3$-Zersetzung beginnt. Die untere Temperaturgrenze wird im wesentlichen durch den Schmelzpunkt des $KNO_3$ mit 339° bestimmt, wobei die Zugabe von $AgNO_3$ und gegebenenfalls noch weiterer Stoffe zu einem Absenken der Mindesttemperatur bis auf etwa 300°C führen kann. Bei Pasten kann die untere Temperaturgrenze noch darunter liegen; allerdings wird dann die Austauschzeit länger. Vorteilhaft werden Temperaturen zwischen 350°C, vorzugsweise 390°C und 420°C gewählt. In diese Schmelze wird dann das Glassubstrat eine vorbestimmte Zeitlang eingebracht, beispielsweise zwischen 0,5 und 200 Stunden, insbesondere zwischen 4 und 16 Stunden lang. Um dabei das Glassubstrat möglichst gleichmäßig von allen Seiten dem Ionenaustausch zu unterwerfen, kann es vorteilhaft mittels einer entsprechenden Halterung in der Schmelze gedreht werden. Durch den Rühreffekt werden annähernd gleichbleibende Austauschbedingungen für jeden Punkt des Substrates erreicht. Dies hat gleichmäßige Diffusionsschichten und dementsprechend gleichmäßige Druckspannungszonen zur Folge. Dabei ist zu beobachten, daß das Silber im Glasmaterial zum größten Teil als metallisches Silber (Ag°) in kolloidaler Form vorliegt. Da Silberatome einen deutlich größeren Radius als Ag+-Ionen besitzen, führt die zu beobachtende Reduzierung von Ag+ zu Ag° zu einer Volumenvergrößerung der Glaskomponenten und damit zu einer entsprechend erhöhten Druckspannung in den Glasschichten mit Ionenaustausch.

Betrachtet man die Diffusionsprofile von K, Na und Ag in erfindungsgemäß behandelten Glassubstraten, so zeigt sich ein an sich zu erwartender Profilverlauf. Dabei wird die Diffusion des Kaliums von der Silberdiffusion nicht merklich beeinflußt. Das Kalium-Diffusionsprofil erreicht immer etwa 1/8 bis 1/10 der Silberdiffusionstiefe. Wie ferner zu erwarten ist, nehmen mit zunehmender Austauschzeit und Austauschtemperatur die Diffusionsprofile an Tiefe zu. So hat eine Temperaturerhöhung um 50 K in etwa den gleichen Einfluß wie eine Vervierfachung der Austauschzeit, nämlich eine Verdoppelung der Diffusionstiefe. Demnach ist bei einem $K^+$-und $Ag^+$-Austausch gegenüber dem reinen $K^+$-Austausch bei gleicher Austauschtemperatur eine Verringerung der Austauschzeit um etwa einen Faktor 4 möglich, falls man sich mit geringeren Festigkeiten des Glassubstrates begnügen kann.

Bei dem erfindungsgemäßen Verfahren ist gegebenenfalls der Ionenaustausch auch in einem elektrischen Gleichspannungsfeld möglich, um das gesamte Diffusionsprofil in Richtung auf das Glasinnere zu verschieben. Eine entsprechende Schaltung kann beispielsweise so erfolgen, daß die Anode die für die Diffusion vorgesehenen Ionen abgibt, während eine reaktive Kathode die austretenden Na-Ionen aufnimmt. Hierbei ist jedoch darauf zu achten, daß lokale Aufladungsprozesse vermieden werden. Die maximale Spannung wird dabei durch die Aufheizung der Glasprobe bestimmt.

Es wurde festgestellt, daß ein 16stündiger Ionenaustausch bei 400°C in einer Schmelze aus $KNO_3$ und geringen Mengen $AgNO_3$ die Festigkeit gegenüber entsprechenden nicht-gehärteten Glasproben um etwa das 6-Fache steigert. Gegenüber Proben, die reinem $KNO_3$ ausgesetzt werden, beträgt die zusätzliche Festigkeitssteigerung unter sonst gleichen Bedingungen immerhin noch mindestens 50 %. Der auf die $Ag^+$-Ionen-Beimischung zurückzuführende zusätzliche Härtungseffekt ist nur wenig von der $AG^+$-Konzentration in der Schmelze abhängig. $AgNO_3$-Konzentrationen von 1 bis 4 Gew.-% in der Schmelze bewirken etwa gleiche Diffusionsprofile in dem Glas. Am Boden des entsprechenden Salzbades ist nämlich die Bildung eines Sumpfes zu beobachten, welcher immer für ein an Silber gesättigtes Bad und damit für eine konstante Silberkonzentration sorgt.

Zur Herstellung des erfindungsgemäßen Glassubstrates bzw. zur Durchführung des entsprechenden Verfahrens ist eine Vorrichtung besonders geeignet, wie sie in Figur 2 als Querschnitt - schematisch veranschaulicht ist. Diese allgemein mit 12 bezeichnete Vorrichtung weist hierzu einen Umluftofen 16 auf, mit dem in einem behälterartig abgeschlossenen Arbeitsraum 17 ein vorbestimmtes Temperaturniveau zu erzeugen ist. In dem Arbeitsraum ist ein Auffanggefäß 18 mit einer Sandschüttung 19 angeordnet, welches einen Quarztiegel 20 umschließt. In dem Tiegel 20 befindet sich eine Schmelze 22. Diese Schmelze besteht erfindungsgemäß zu einem großen Teil aus $KNO_3$, wobei zumindest noch $AgNO_3$ als weiteres Additiv beigefügt ist. Dabei liegt das durch den Umluftofen 16 erzeugte Temperaturniveau der Schmelze im allgemeinen zwischen 300°C und 500°C. Das zu härtende plattenförmige Glassubstrat 2 wird von einer Halterung 23 getragen, die über ein Gestänge 24 das Eintauchen des Substrates in die Schmelze erlaubt. Um dabei das Glassubstrat möglichst gleichmäßig von allen Seiten dem Ionenaustausch zu unterwerfen, kann es vorteilhaft mittels eines an dem Gestänge 24 angreifenden Motors 24a in der Schmelze gedreht werden.

Nachdem sich dann das Glassubstrat 2 eine vorbestimmte Zeitlang, im allgemeinen zwischen 0,5 und 200 Stunden, vorzugsweise zwischen 4 und 16 Stunden, in der Schmelze 22 befunden hat, wird es über das Gestänge 24 aus dieser wieder herausgezogen.

Bei dem sich daran anschließenden Abkühlungsprozeß auf Raumtemperatur besteht jedoch die Gefahr, daß makroskopische Risse in dem Glasmaterial auftreten. Solche Risse können auf das Schrumpfungsverhalten der auf der Glasoberfläche unvermeidlich zurückbleibenden Reste der Schmelze zurückgeführt werden. Solche Reste sind in dem in Figur 3 gezeigten Ausschnitt des in der Halterung 23 nach dem Ionenaustauschprozeß hängenden Glassubstrates 2 angedeutet. Die Reste werden nachfolgend als $KNO_3$-Reste oder $KNO_3$-Filme bezeichnet, obwohl sie auch noch das mindestens eine Additiv enthalten. Wie aus Figur 3 zu entnehmen ist, treten insbesondere im Bereich der Angriffspunkte 25 der Halterung 23 an dem Glassubstrat 2 wulstartige Verdickungen 26 des zurückbleibenden $KNO_3$-Filmes 27 auf. Um nun beim Abkühlen Zugspannungen in dem Glas zu verhindern, die von dem schrumpfenden $KNO_3$-Film 26, 27 auf das Substrat 2 übertragen werden, ist gemäß der Erfindung eine Aufweichung des $KNO_3$-Filmes vorgesehen. Hierzu wird das Glassubstrat dem Arbeitsraum 17 entnommen und in ein besonderes Gefäß gegeben, das mit heißem Wasserdampf gespült wird. Das Glassubstrat 2 sollte sich bei dieser Herausnahme aus dem Arbeitsraum 17 möglichst nur maximal um 100°C abkühlen. Die Wasserdampftemperatur in dem besonderen Behälter muß dabei anfänglich über 115°C liegen, wobei Anfangstemperaturen zwischen 200°C, vorzugsweise 250°C, und der Temperatur der Schmelze 22 besonders günstig sind. Das hydroskopische $KNO_3$ nimmt bei der hohen Temperatur Wasser auf und löst sich somit von der Oberfläche 4 des Glassubstrates. Es können folglich durch das KNO₃ keine zusätzlichen Spannungen in dem Glassubstrat induziert werden. Eine sich daran anschließende Abkühlung bis auf Raumtemperatur läßt sich dann ohne weiteres in bekannter Weise durchführen. Hierbei kann das Glassubstrat auch in der Wasserdampf-Atmosphäre z.B. bis zur Kondensationstemperatur des Wasserdampfes verbleiben.

**Ansprüche**

1. Plattenförmiger, aus nicht-magnetischem Material bestehender Trägerkörper (2) für ein insbesondere senkrecht (vertikal) zu magnetisierendes Aufzeichnungsmedium ( 3), dessen mindestens eine Flachseite (4 oder 5) eine sehr glatte Oberfläche aufweist, auf welche zumindest eine entsprechend zu magnetisierende Speicherschicht (8 bzw. 9) aufzubringen ist, **dadurch gekennzeichnet,** daß als Trägerkörper ein chemisch gehärtetes Glassubsträt (2) vorgesehen ist, welches neben Na⁺-Ionen in an seinen Oberflächen angrenzenden Zonen (6, 7) eingebaute K⁺-Ionen und zusätzlich noch Ag⁺-Ionen und/oder Ag-Atome aufweist.

2. Trägerkörper nach Anspruch 1, **dadurch gekennzeichnet,** daß in den Oberflächenzonen (6, 7) der in Atom-% zu messende Anteil an Ag⁺-Ionen und/oder Ag-Atome kleiner als der Anteil an K⁺-Ionen ist.

3. Trägerkörper nach Anspruch 1 oder 2, **dadurch gekennzeichnet,** daß die senkrecht bzgl. der Flachseiten (4, 5) zu messende Tiefe (t) der Oberflächenzonen (6, 7) größer als 100 µm ist.

4. Trägerkörper nach einem der Ansprüche 1 bis 3, **dadurch gekennzeichnet,** daß die Oberflächenebenheit der mindestens einen mit der Speicherschicht (8, 9) zu versehenden Flachseite (4 oder 5) des Glassubstrates (2) unter 2 µm liegt, vorzugsweise höchstens 500 nm beträgt.

5. Trägerkörper nach einem der Ansprüche 1 bis 4, **dadurch gekennzeichnet,** daß die auf eine Meßstrecke von 2 mm Länge bezogene maximale Rauhtiefe ($R_t$) der mit der Speicherschicht (8, 9) zu versehende Flachseite (4 oder 5) des Glassubstrates (2) unter 40 nm, vorzugsweise unter 20 nm liegt.

6. Trägerkörper nach einem der Ansprüche 1 bis 5, **dadurch gekennzeichnet,** daß sein Glassubstrat (2 ) aus einem Natrium-Kalk-Silikatglas besteht.

7. Verfahren zur Herstellung eines Trägerkörpers nach einem der Ansprüche 1 bis 6, **dadurch gekennzeichnet,** daß zu einer chemischen Härtung des Glassubstrates (2) mittels eines Ionenaustauschprozesses unterhalb der für das Glasmaterial charakteristischen Transformationstemperatur das Glassubstrat (2) eine vorbestimmte Zeitlang in eine KNO₃-Schmelze (22) eingebracht und schließlich außerhalb der Schmelze auf Raumtemperatur abgekühlt wird.

8. Verfahren nach Anspruch 7, **dadurch gekennzeichnet,** daß der KNO₃-Schmelze (22) maximal Gew.-% AgNO₃, vorzugsweise zwischen 1 und 4 Gew.-% AgNO₃, zugesetzt wurden.

9. Verfahren nach Anspruch 7 oder 8, **dadurch gekennzeichnet,** daß die Schmelze (22) auf einem Temperaturniveau von höchstens 500°C, vorzugsweise höchstens 420°C gehalten wird.

10. Verfahren nach Anspruch 9, **dadurch gekennzeichnet,** daß die Schmelze (22) auf einem Temperaturniveau von mindestens 300°C, vorzugsweise von mindestens 350°C, insbesondere von mindestens 390°C gehalten wird.

11. Verfahren nach einem der Ansprüche 7 bis 10, **dadurch gekennzeichnet,** daß das Glassubstrat (2) während einer Zeit zwischen 0,5 Stunden und 200 Stun den, vorzugsweise zwischen 4 und 16 Stunden, in der Schmelze (22) gehalten wird.

12. Verfahren nach einem der Ansprüche 7 bis 11, **dadurch gekennzeichnet ,** daß das Glassubstrat (2) in der Schmelze (22) bewegt, vorzugsweise gedreht wird.

13. Verfahren nach einem der Ansprüche 7 bis 12, **dadurch gekennzeichnet,** daß der Ionenaustauschprozeß in einem elektrischen Gleichspannungsfeld vorgenommen wird.

14. Verfahren nach einem der Ansprüche 7 bis 13, **dadurch gekennzeichnet ,** daß das aus der Schmelze (22) wieder entnommene, noch heiße Glassubstrat (2) in eine Wasserdampf-Atmosphäre mit einer Temperatur von über 115°C eingebracht wird.

15. Verfahren nach Anspruch 14, **dadurch gekennzeichnet,** daß die Abkühlung des Glassubstrates (2) zumindest teilweise in der Wasserdampf-Atmosphäre vorgenommen wird.

16. Verfahren nach Anspruch 15, **dadurch gekennzeichnet,** daß das noch heiße Glassubstrat (2) in der Wasserdampf-Atmosphäre zumindest bis zur Kondensationstemperatur des Wasserdampfes abgekühlt wird.

17. Verfahren nach einem der Ansprüche 14 bis 16, **dadurch gekennzeichnet ,** daß das nur maximal um 100°C gegenüber der Temperatur der Schmelze (22) abgekühlte Glassubstrat (2) in die Wasserdampf-Atmosphäre eingebracht wird.

18. Verfahren nach einem der Ansprüche 14 bis 17, **dadurch gekennzeichnet,** daß in die Wasserdampf-Atmosphäre mit einer anfänglichen Temperatur von mindestens 200°C, vorzugsweise von mindestens 250°C, das noch heiße Glassubstrat (2) eingebracht wird.

19. Verfahren nach einem der Ansprüche 14 bis 18, **dadurch gekennzeichnet,** daß die Wasserdampf-Atmosphäre in einem besonderen, die Schmelze (22) nichtenthaltenden Behälter durch einen Bespülungsvorgang ausgebildet wird.

FIG 3

FIG 2

FIG 1

## EUROPÄISCHER RECHERCHENBERICHT

Europäisches Patentamt

Nummer der Anmeldung

### EINSCHLÄGIGE DOKUMENTE

EP 87109620.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | <u>DE - A1 - 3 628 225</u> (TDK CORPORATION)<br><br> * Ansprüche 1-8; Beispiel 3 *<br><br>---- | 1,2,4,<br>7-9 | G 11 B 5/704 |

RECHERCHIERTE SACHGEBIETE (Int. Cl.4)

G 11 B 5/00

G 11 B 7/00

Der vorliegende Recherchenbericht wurde für alle Patentansprüche erstellt.

| Recherchenort | Abschlußdatum der Recherche | Prüfer |
|---|---|---|
| WIEN | 20-10-1987 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82